# EUROPEAN PATENT APPLICATION

(11) **EP 1 249 657 A1**
(43) Date of publication of application: **16.10.2002**
(21) Application number: 01830253.9
(22) Date of filing: 10.04.2001
(51) Int. Cl.: F16L 37/252, F16L 15/00, F23J 13/02

(54) **Tubular element for the construction of gas pipelines**

(71) Applicant: Flex Tubi S.r.l., 37060 Buttapietra (Verona) (IT)
(72) Inventor: De Paoli, Antonello, 37060 Castel d'Azzano (IT)
(74) Representative: Lanzoni, Luciano

(57) **Abstract**

A modular tubular element (1) for the construction of pipelines for gaseous substances, made of laminar material, and having at least a first and a second end (2), (3) of cone frustum shape substantially counter-shaped relative to each other. On the surfaces of the ends (2), (3) are mounted engagement means (6) and a housing seat (7). The housing seat (7) can be coupled to the engagement means (6) of another modular tubular element (1) to obtain a pipeline. The engagement means (6) comprise a plurality of buttons (10) positioned on the surface of the related end (2), (3) and uniformly distributed along a circumference lying in a plane that is perpendicular to the axis of the cone frustum described by the surface of the related end (2), (3). The housing seat (7) comprises a plurality of grooves (11), each developing at least in part along a circular helix trajectory coaxial to the cone frustum described by the surface of the related end (2), (3).

## Description

The present invention relates to a modular tubular element for the construction of pipelines for gaseous substances of the type comprising the characteristics expressed in the preamble to claim 1.

In the conditioning and heating field, wide use is made of pipelines for the supply of air and expulsion of combustion exhaust gases, constituted by a plurality of modular tubular elements made of laminar material (metallic or plastic).

The conduits used in heating systems, in particular those destined to the expulsion of combustion exhaust gases, must however guarantee, in operation, certain performance levels in regard to gas tightness, tightness against humidity, uniformity of behaviour with temperature changes, ease of disassembly, as well as fire retarding qualities at least in some applications.

Currently, there are two different types of modular elements.

In a first known type, each tubular element has a first and a second end (or even more than two in the case of junction elements, for instance T-shaped) with cone frustum shape and with one counter-shaped relative to the other.

In particular, the first end can have nozzle shape whilst the second end is funnel shaped or vice versa.

In the construction of the conduit, the first end of an element is forcibly inserted into the second end of another element, whereupon the two elements are locked by means of a connecting band that is coupled with appropriate detents obtained on each element.

This first example of prior art, however, presents a series of drawbacks.

In the first place in order to force an element into the other it is necessary to beat on the free end of an element with the risk of warping it.

In the second place, once an element is locked in the other, it is very difficult to uncouple the two elements to proceed with normal maintenance operations.

In spite of this, such conduits require the use of connecting bands to guarantee the mechanical adhesion required in operation.

A second known type of tubular elements have two (or more) threaded cylindrical ends, counter-shaped relative to each other.

Since play between the two threads is considerable, to guarantee the tightness of the conduit a sealing gasket is provided, integral with an element, against which the other element abuts.

Said gasket can be made of silicone material for conduits destined to be used with damp gas at low temperatures, or of ceramic for dry gases at high temperatures.

This second type, however, is also not free from drawbacks.

In particular the second type of modular tubular elements does not guarantee a sufficient seal under all possible conditions of use.

In the second place, the construction of said modular elements is relatively complex because of the presence of a gasket.

Moreover, the gasket mounted on an element is constraining for the use of that element, since silicone gaskets do not withstand high temperatures, and ceramic gaskets do not withstand humidity.

In this situation the technical task constituting the basis for the present invention is to obtain a modular tubular element for the construction of conduit for gaseous substances that overcomes the aforementioned drawbacks.

In particular, a technical task of the present invention is to obtain a modular tubular element for the construction of conduits for gaseous substances which guarantees good gas tightness and tightness against humidity, and which does not change its characteristics with variations in the operating temperature.

Another technical task of the present invention is to obtain a modular tubular element for the construction of conduits for gaseous substances that allows for an easy assembly and disassembly of the conduit.

A further technical task of the present invention is to obtain a modular tubular element for the construction of conduits for gaseous substances that does not require the use of connecting bands or gaskets.

The specified technical task and the indicated aims are substantially reached by a modular tubular element for the construction of conduits for gaseous conduits, as described in the accompanying claims.

Further features and the advantages of the present invention shall become more readily apparent from the detailed description of a preferred, but not exclusive, embodiment of a modular tubular element for the construction of conduits for gaseous substances, illustrated in the accompanying drawings, in which:
- Figure 1 shows a lateral view of a modular tubular element for the construction of conduits for gaseous substances according to the present invention;
- Figure 2 shows the tubular element of Figure 1 according to arrow II-II of Figure 1;
- Figure 3 shows the tubular element of Figure 1 according to arrow III-III of Figure 1;
- Figure 4 shows a T-shaped tubular element obtained according to a variation of the present invention;
- Figure 5 shows the tubular element of Figure 4 according to arrow V-V of Figure 4;
- Figure 6 shows a section view of a detail of a first coupling mode of two tubular elements according to the present invention;
- Figure 7 shows a lateral view of an alternative embodiment of a tubular element according to the present invention; and
- Figure 8 shows a section view of the detail of a second coupling mode of two tubular elements according to the present invention.

With reference to the aforementioned figures, the reference number 1 globally indicates a modular tubular element for the construction of conduits for gaseous substances according to the present invention.

The tubular element 1 is made of laminar material and has at least a first and a second end 2, 3 both with cone frustum shape. The first end 2 is shaped as a nozzle and its diameter decreases towards its own edge 4, whilst the second end 3 is shaped as a funnel, and its diameter increases towards its own edge 5.

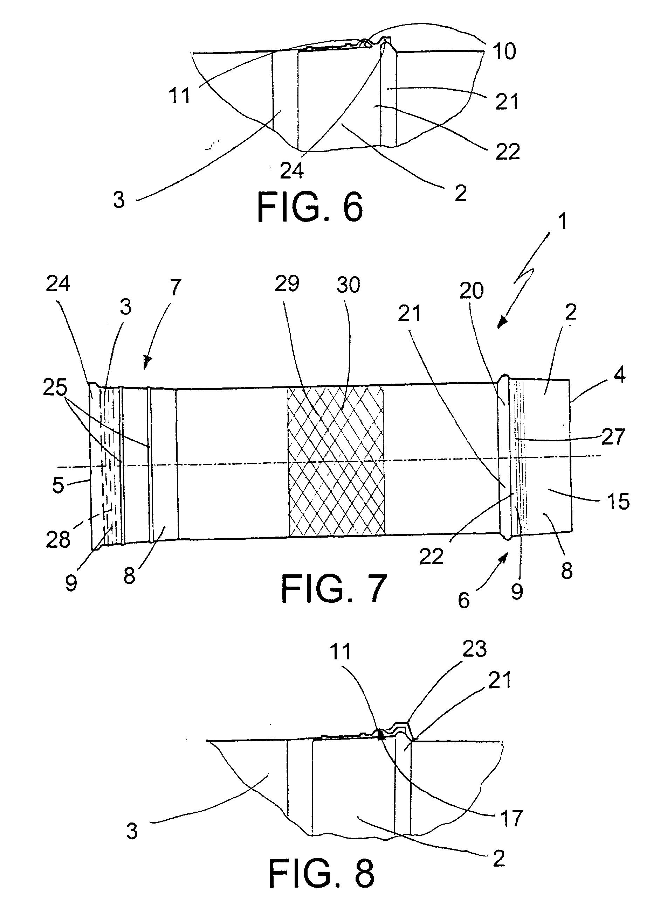

The second end 3 is substantially shaped counter to the first end 2 in such a way that a plurality of tubular elements 1 can be connected consecutively, inserting the first end 2 of one into the second end 3 of another and so on (Figure 6).

The tubular element 1 further comprises engagement means 6 integrally mounted on the surface of an end 2, 3, and a housing seat 7 mounted on the surface of the other end 2, 3.

The means 6 for engaging a tubular element 1 can be coupled to the housing seat 7 of another tubular element 1 to guarantee the mechanical adhesion between the two elements.

According to the present invention the development of the housing seat 7 on the surface of the related end 2, 3, has, at least in part, a first component parallel to the axis of the cone frustum described by the surface of the related end 2, 3, and a second component rotating about the same axis.

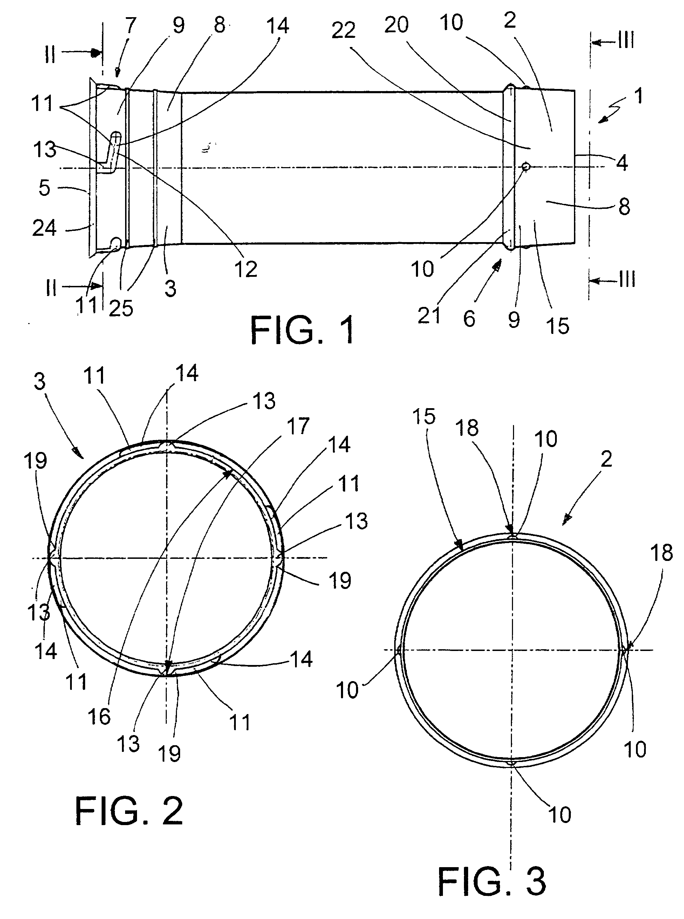

As shown in the accompanying figures, a seal area 8 and a coupling area 9 can be identified on each end 2, 3 (Figures 1, 4 and 7).

To the coupling area 9 of each end 2, 3 are alternatively fastened the engagement means 6 or the housing seat 7, whilst the seal area 8 is constituted by a band of the surface of the cone frustum.

Preferably, the seal area 8 is located in proximity to the edge 4, for the first end 2, and in correspondence with the part farther away from the edge 5, for the second end 3, however this is not constraining.

According to a preferred embodiment (Figures 1-3 and 6) the engagement means 6 are constituted by a plurality of buttons 10 positioned on the surface of the related end 2, 3, and uniformly distributed along a circumference lying in a plane perpendicular to the axis of the cone frustum described by the surface of the related end 2, 3.

The housing seat 7, in turn, is constituted by a plurality of grooves 11, whose number is equal to the number of buttons 10.

Said grooves 11 are obtained on the surface of the related end 2, 3 and are uniformly distributed along a ring that is coaxial to the cone frustum described by the surface of the related end 2, 3.

Each groove 11 has a cross section that is substantially counter-shaped relative to the profile of said buttons 10.

Preferably each groove 11 develops along a trajectory 12 constituted by a first rectilinear segment 13 proximate to the edge 4, 5 of the related end 2, 3 and by a second inner helical segment 14.

In particular the helical segment 14 develops according to a circular helix, coaxial to the cone frustum described by the surface of the end 2, 3 of the tubular element 1 whereto the grooves 11 are associated.

The rectilinear segment 12 develops substantially parallel to this axis.

Advantageously, in the preferred embodiment the engagement means 6 are associated to the first end 2 whilst the housing seat 7 is associated to the second end 3, so that the buttons 10 are obtained on the outer surface 15 of the first end 2 and the grooves 11 are obtained in the inner surface 16 of the second end 3.

Wholly equivalent constructive variations are in any case provided, wherein the engagement means 6 are associated to the second end 3 and the housing seat 7 is associated to the first end 2, so that the buttons 10 are obtained on the inner surface 16 of the second end 3 and the grooves 11 are obtained in the outer surface 15 of the first end 2.

Preferably the bottom 17 of each groove 11 develops at a constant distance from the axis of development of the related end 2, 3. This distance, moreover, has a value ranging between the value of the distance of the summit 18 of the buttons 10 of the axis of the cone frustum described by the end 2, 3 whereto they are fastened, and the value of the distance of the edge 19 of the groove 11 itself from the axis of the related cone frustum.

Because of the way it is constituted, the first embodiment can thus be considered as a thread with multiple starts.

The tubular element further comprises at least a reinforcing rib 20 constituted by a collar 21 positioned in correspondence with the area with greater diameter 22 of the first end 2.

Said collar 21 constitutes a ring that is coaxial to the cone frustum described by the surface of the related end 2, 3.

The collar 21 of each element is removably connectable by means of a connecting band 23 and a flaring 24 obtained in correspondence with the edge 5 of the second end 3 of another tubular element 1.

In the illustrated embodiments, other reinforcing ribs 25 are also provided, whose presence or absence can be determined based on specific mechanical strength requirements resulting from the normal design process for a pipeline.

For the construction of modular junction tubular elements 1, having more than one end, a first possibility provides for the use of tubular elements 1 in which each end is provided either with engagement means 6 or with a housing seat 7.

However, since the orientation in space of a junction tubular element 1 mounted in a system depends on the position of the various pipeline segments whereto it is connected, the embodiment of the junction tubular element 1 according to the present invention provides for only one of the ends to be fitted either with the buttons 10 or with the grooves 11.

The connection of the other ends to the respective pipeline segments is achieved by fixing, and adhesion is guaranteed by connecting bands 23 (Figure 8).

The better to clarify this concept, the conformation of a tubular junction element 1 shaped as a T and constructed in accordance with the preferred embodiment of the present invention is illustrated herein, purely by way of example, the same considerations holding true for tubular junction elements 1 in general.

Said T element can be connected both upstream and downstream to other tubular elements 1 constructed according to the present invention.

The T shaped modular tubular element 1 comprises in addition to the first and the second end 2, 3 also a third end 26 (Figure 7).

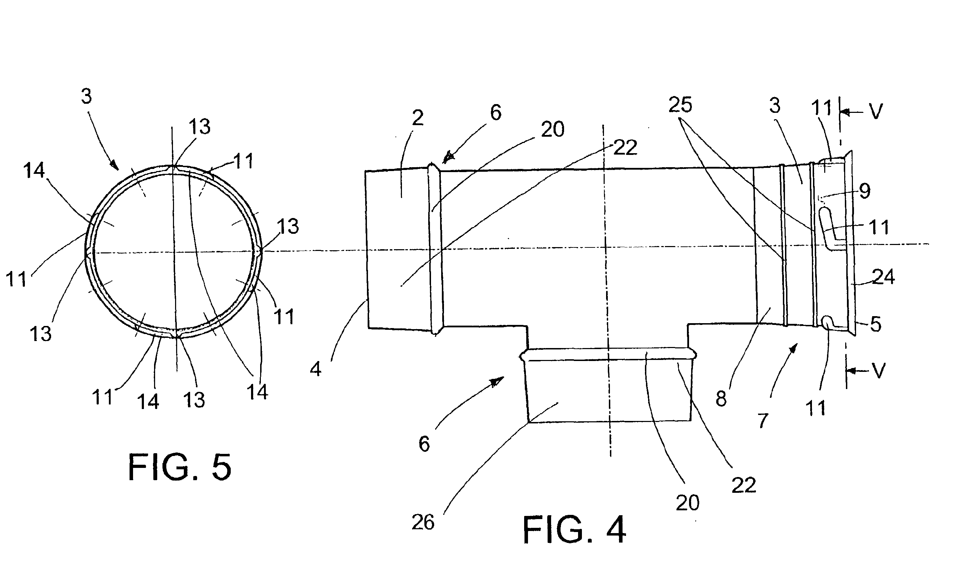

The third end 26 is also cone frustum shaped and it is similar either to the first or to the second end 2, 3. In the example shown in Figure 4 the surface of the third end 26 has a profile coinciding with that of the first end 2.

Each end 2, 3, 26 is provided either with the engagement means 6 or with the housing seat 7.

In particular in the illustrated embodiment the engagement means 6 are associated to the first and to the third end 2, 26, whilst the housing seat 7 is associated to the second end 3.

In the illustrated embodiment, the housing seat 7 on the second end 3 comprises a plurality of grooves 11 similarly to what has been described above for the tubular elements 1 with two ends 2, 3. In the same way on the edge 5 of the second end 3 is also obtained the flaring 24.

The engagement means 6, instead, comprise only the reinforcing groove 20 constituted by the collar 21 positioned in correspondence with the area with greater diameter 22 of the first end 2, and developing on a ring that is coaxial to the cone frustum described by the surface of the first end 2.

As stated previously, each collar 21 can be removably connected, by means of a connecting band 23, to a flare 24 of another modular tubular element 1.

Wholly similar considerations apply if the T shaped tubular element 1 has a first end 2 provided with buttons 10 and a second and a third cone frustum shaped ends 3, 26 lacking grooves 11.

In a second embodiment of the tubular element 1 of the present invention, the buttons 10 and the grooves 11 are replaced with two threads, a first thread 27 obtained on the first end 2, preferably in correspondence with the related coupling area 9, and a second thread 28 counter-shaped relative to the first thread 27 and obtained on the second end 3, preferably in correspondence with the related coupling area 9.

The first thread 27 of a tubular element 1 can be screwed onto the second thread 28 of another modular tubular element 1.

Similarly to the first embodiment, also the modular junction tubular elements 1, having more than two ends, obtained in accordance with the second embodiment, can advantageously be provided with the thread on a single end 2, 3, 26, the other two ends having only cone frustum shape, provided that on each end 2, 3, 26 is provided either a collar 21, or a flaring 24.

In both embodiments, the modular tubular element 1 can further comprise an intermediate portion 29 located between the first and the second end 2, 3 and having a outer surface 30 that is knurled to allow a better grip on the tubular element 1 by an operator (Figure 7).

The surface of the ends 2, 3, 26 of the modular tubular element 1 described, as stated, cone frustums. In all preferred embodiments, said cone frustums have an angle of aperture that is smaller than 5°, and, preferably, between 1° and 3°.

A further envisioned application of the present invention is constituted by dual wall pipelines, where the pipe constituting the inner wall, or the pipe constituting the outer wall, or both, are obtained with modular elements 1 as described above.

The construction of pipelines by means of modular tubular elements 1 obtained in accordance with the present invention is accomplished by inserting the first end 2 of an element into the second end 3 of another element, taking care to couple the engagement means 6 to the housing seat 7.

As regards the first embodiment, this entails inserting the buttons 10 into the grooves 11.

With reference to the embodiment illustrated in the accompanying figures 1 through 6, the first end 2 of a modular tubular element 1 is then inserted into the second end 3 of another tubular element 1 with a movement according to the direction of development of the rectilinear segment 12 of the grooves 11.

Once the end of the rectilinear segment 12 is reached, an element is rotated relative to the other in such a way that the buttons 10 follow the helical segment 14 of the grooves 11.

The helical shape of this segment of the grooves 11 causes a further axial advancement of a tubular element 1 relative to the other until they are both locked together when the two seal areas 8 of the two ends 2, 3 are tightened against each other, as Figure 6 shows.

The modular tubular elements 1 according to the present invention can be made both of metallic materials and of plastic materials, depending on their intended use.

The present invention achieves important advantages.

In the first place, the modular tubular elements obtained in accordance with the present invention, if made with suitable materials, guarantee good gas tightness both at high and at low temperatures, as well as under humid or dry conditions.

The modular tubular element for the construction of pipelines for gaseous substances of the present invention further guarantees ease of assembly and disassembly.

Additionally the modular tubular element does not require the use of gaskets, and also the number of connecting bands necessary for the construction of an entire pipeline is very limited.

This feature consequently entails a reduction in the costs of construction of the modular elements relative to those currently in use, as well as a reduction in warehouse space requirements.

It should also be noted that the present invention is relatively easy to implement and that also the cost connected to the implementation of the invention is not very high.

The invention thus conceived can be subject to numerous modifications and variations, without thereby departing from the scope of the inventive concept that characterises it.

All components can be replaced by technically equivalent elements and in practice all materials employed, as well as the shapes and dimensions of the various components may be any, depending on requirements.

## Claims

1. A modular tubular element for the construction of pipelines for gaseous substances made of laminar material and having at least a first and a second end (2), (3) of cone frustum shape, said first end (2) having its diameter that decreases towards its own edge (4), and said second end (3) being substantially counter-shaped relative to said first end (2) and having its diameter that increases towards its own edge (5), **characterised in that** it further comprises engagement means (6) integrally mounted on the surface of one of said ends (2), (3), and a housing seat (7) fastened to the other one of said ends (2), (3) and able to be coupled to the engagement means (6) of another modular tubular element (1), said housing seat (7) extending on the surface of the related end (2), (3) and having at least a development component parallel to the axis of the cone frustum described by the surface of the related end (2), (3).

2. A modular tubular element as claimed in claim 1 **characterised in that** said engagement means (6) comprise a plurality of buttons (10) positioned on the surface of the related end (2), (3), and uniformly distributed along a circumference lying in a plane that is perpendicular to the axis of the cone frustum described by the surface of the related end (2), (3), and **in that** said housing seat (7) comprises a plurality of grooves (11), the number of grooves (11) being equal to the number of buttons (10), said grooves (11) being obtained on the surface of the related end (2), (3) and being uniformly distributed on a ring that is coaxial to the cone frustum described by the surface of the related end (2), (3), each of said grooves (11) having its section substantially counter-shaped relative to the profile of said buttons (10), and each of said grooves (11) developing at least in part along a circular helix trajectory coaxial to the cone frustum described by the surface of the related end (2), (3).

3. A modular tubular element as claimed in claim 2 **characterised in that** each groove (11) further has a segment whose development is substantially parallel to the axis of the cone frustum described by the related end (2), (3).

4. A modular tubular element as claimed in claim 2 or 3 **characterised in that** the bottom (17) of said groove (11) develops at a constant distance from the axis of development of the cone frustum of the related end (2), (3), and **in that** the distance of the summit (18) of said buttons (10) from the axis of the cone frustum described by the end (2), (3) whereto they are fastened, has a value ranging between the value of the distance of the bottom (17) of the groove (11) from the axis of the related cone frustum, and the value of the distance of the edge (19) of the groove (11) from the axis of the related cone frustum.

5. A modular tubular element as claimed in claim 2, 3 or 4 **characterised in that** it further comprises at least a reinforcing rib (20) constituted by a collar (21) positioned in correspondence with the area of greater diameter (22) of said first end (2), said collar (21) developing along a ring that is coaxial to the cone frustum described by the surface of the first end (2).

6. A modular tubular element as claimed in claim 2 **characterised in that** it further comprises a flaring (24) in correspondence with the edge (5) of the second end (3), removably connectable by means of a connecting band (23) to a collar (21) of another modular tubular element (1).

7. A modular tubular element as claimed in claim 1 **characterised in that** said engagement means (6) comprise a first thread (27) and **in that** said housing seat (7) comprises a second thread (28) counter-shaped relative to the first thread (27) and able to be screwed onto the first thread (27) of another modular tubular element (1).

8. A modular tubular element as claimed in any of the previous claims, **characterised in that** it further comprises an intermediate portion (29) connected between said first and second end (2), (3), said intermediate portion (29) having a knurled outer surface (30).

9. A modular tubular element as claimed in any of the previous claims, **characterised in that** said engagement means (6) are associated to said first end (2) and said housing seat (7) is associated to said second end (3).

10. A modular tubular element as claimed in any of the previous claims from 1 to 8 **characterised in that** said engagement means (6) are associated to said second end (3) and said housing seat (7) is associated to said first end (2).

11. A modular tubular element as claimed in claim 1 **characterised in that** it further comprises at least a third end (26), **in that** said engagement means (6) are associated to said first end (2) and comprise at least a reinforcing rib (20) constituted by a collar (21) positioned in correspondence with the area of greater diameter (22) of said first end (2), said collar (21) developing on a ring that is coaxial to the cone frustum described by the surface of the related end, and **in that** it further comprises a flaring (24) positioned in correspondence with the edge (5) of the second end (3), and removably connectable by means of a connecting band (23) to a collar (21) of another modular tubular element (1), and **in that** said housing seat (7) comprises a plurality of grooves (11) obtained on the surface of the second end (3) and uniformly distributed on a ring that is coaxial to the cone frustum described by the surface of the related end, each of said grooves (11) developing at least in part along a circular helix trajectory coaxial to the cone frustum described by the surface of the second end (3), said grooves (11) being able to be associated to the buttons (10) of a modular tubular element (1) obtained according to any one of the claims from (2) to (6).

12. A modular tubular element as claimed in claim 11 **characterised in that** each groove (11) further presents a segment whose development is substantially parallel to the axis of the cone frustum described by the second end (3).

13. A modular tubular element as claimed in claim 11 or 12 **characterised in that** the bottom (17) of said groove (11) develops at a constant distance from the axis of development of the cone frustum of the second end (3).

14. A modular tubular element as claimed in any of the previous claims, **characterised in that** the cone frustums described by said first and second end (2), (3) have an angle of aperture smaller than 5°.

15. A modular tubular element as claimed in any of the previous claims, **characterised in that** the cone frustums described by said first and second end (2), (3) have an angle of aperture ranging between 1° and 3°.
